# EUROPEAN PATENT APPLICATION

(11) **EP 4 417 679 A1**
(43) Date of publication of application: **21.08.2024**
(21) Application number: 23210190.7
(22) Date of filing: 15.11.2023
(51) Int. Cl.: C12G 1/00, C12G 1/02, G05B 19/00, G05B 19/04, C12G 1/032

(54) **PROCESS AND APPARATUS USABLE FOR THE VINIFICATION OF CRUSHED GRAPES**

(30) Priority: 14.11.2022 IT 202200023430
(71) Applicant: Gimar S.r.l., 15040 Occimiano (AL) (IT)
(72) Inventor: LAMBRI, Milena, Piacenza (IT); FRANCIA, Marco, Casale M.TO (AT) (IT)
(74) Representative: Silva, Valentina

(57) **Abstract**

A process **(10)** usable for the vinification of crushed grapes, in particular comprising liquid must and solid marc, using a corresponding apparatus **(10)** for the vinification of corresponding crushed grapes, which comprises processor means **(12),** input means **(14)** of corresponding data and/or signals into said processor means **(12),** and output means **(16)** of corresponding data and/or signals originating from said processor means **(12),** a collection or set **(18)** of vinification recipes **(181),** which collection is housed in a corresponding memory of, or in connection with, said processor means **(12).** Corresponding vinification inputs **(20)** are provided to said processor means **(12),** and said processor means **(12)** are configured such that, starting from said vinification inputs **(20),** they select **(19),** in said collection, or set, **(180)** of vinification recipes, a corresponding vinification recipe **(181).**

## Description

The present finding refers to a process usable for the vinification of crushed grapes.

Processes are known which are usable for the vinification of crushed grapes, which use a corresponding apparatus for the vinification of corresponding crushed grapes, which comprises processor means, input means of corresponding data and/or signals into said processor means, and output means of corresponding data and/or signals originating from said processor means, a collection or set of vinification recipes, which collection is housed in a corresponding memory of said processor means.

In a known way, these vinification recipes stored in the memory can be manually recalled by the user and used in a corresponding vinification process. However, in this way, it is not possible to work quickly to define an optimal vinification recipe for those specific crushed grapes according to the desired wine, and moreover, human errors can be made in the choice of recipe with respective consequences such as deviations in the characteristics of the wine obtained from the desired one.

There is therefore a need in the industry to operate more quickly and certainly.

There is also a need in the industry to optimally manage the vinification process, avoiding or reducing to a maximum degree the intervention of the operator or oenologist, in particular to reduce human errors and to increase the sustainability of vinification, minimising or cancelling corrective actions and increased costs that are necessary due to errors.

With the present invention it is therefore wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

Therefore a process is provided which is usable for the vinification of crushed grapes, in particular comprising liquid must and solid marc, using a corresponding apparatus for the vinification of corresponding crushed grapes and comprising processor means, input means of corresponding data and/or signals into said processor means, and output means of corresponding data and/or signals originating from said processor means, and using a collection or set of vinification recipes, which collection is housed in a corresponding memory of, or in connection with, said processor means; characterised in that corresponding vinification inputs are provided to said processor means, and said processor means are configured such that, starting from said vinification inputs, they select, in said collection, or set, of vinification recipes, a corresponding vinification recipe.

In this way, it is possible to quickly arrive at an optimal vinification recipe that is selected according to the vinification inputs entered.

According to another aspect, a process is provided which is usable for the vinification of crushed grapes, in particular comprising liquid must and solid marc, using a corresponding apparatus for the vinification of corresponding crushed grapes and comprising processor means, input means of corresponding data and/or signals into said processor means, and output means of corresponding data and/or signals originating from said processor means, and using a collection or set of vinification recipes, which collection is housed in a corresponding memory of, or in connection with, said processor means; characterised in that corresponding vinification inputs are provided to said processor means, and said processor means are configured to control the vinification process or procedure, in particular actuated by said apparatus of vinification of corresponding crushed grapes.

In this way, the vinification process can be optimally managed, avoiding or reducing the intervention of the operator or oenologist to a maximum degree, in particular by minimising human errors and the costs resulting from them, thus increasing the sustainability of the vinification process.

According to another aspect, an apparatus is provided which is usable for the vinification of crushed grapes, in particular comprising liquid must and solid marc, comprising processor means, input means of corresponding data and/or signals into said processor means, and output means of corresponding data and/or signals originating from said processor means; a collection or set of vinification recipes, said collection being housed in a corresponding memory of, or in connection with, said processor means; characterised in that, said processor means are configured such that, from corresponding predefined vinification inputs, they select in said collection of vinification recipes a corresponding vinification recipe.

In this way, it is possible to quickly arrive at an optimal vinification recipe that is selected according to the vinification inputs entered.

This and other innovative aspects or respective advantageous embodiments, are however, set forth in the appended claims, the technical characteristics of which can be found, together with corresponding advantages achieved, in the following detailed description, illustrating a purely non-limiting example of the embodiment of the invention, which is made with reference to the appended drawings, in which:
- figure 1A illustrates a front elevated schematic view of a preferred embodiment of the apparatus implementing the process according to the present invention;
- figure 1B illustrates a rear elevated and partially cutaway schematic view of the preferred embodiment of the apparatus implementing the process according to the present invention;
- figure 1C illustrates a schematic plan view from above of the preferred embodiment of apparatus implementing the process according to the present invention;
- figure 2 illustrates a schematic view of a representation of the collection of recipes used in the preferred embodiment of the process according to the present invention;
- figure 3 illustrates a schematic view of a flowchart relating to the preferred embodiment of the process according to the present invention;
- figure 4 illustrates a view of a first graphical user interface implemented by the preferred embodiment of the process according to the present invention;
- figure 5 illustrates a view of a second graphical user interface implemented by the preferred embodiment of the process according to the present invention;
- figure 6 illustrates a view of a third graphical user interface implemented by the preferred embodiment of the process according to the present invention;
- figure 7 illustrates a view of a fourth graphical user interface implemented by the preferred embodiment of the process according to the present invention;
- figure 8 illustrates a view of a fifth graphical user interface implemented by the preferred embodiment of the process according to the present invention;
- figure 9 illustrates a view of a sixth graphical user interface implemented by the preferred embodiment of the process according to the present invention;
- figure 10 illustrates a view of a seventh graphical user interface implemented by the preferred embodiment of the process according to the present invention;
- figure 11 illustrates a view of an eighth graphical user interface implemented by the preferred embodiment of the process according to the present invention;
- figure 12 illustrates a view of a ninth graphical user interface implemented by the preferred embodiment of the process according to the present invention;
- figure 13 illustrates a view of a tenth graphical user interface implemented by the preferred embodiment of the process according to the present invention.

The attached figures illustrate a preferred implementation of a process that can be used for the vinification, i.e. maceration-fermentation, of crushed grapes, specifically comprising liquid must and solid marc, which includes the skin and seeds of the grape.

The present process uses a corresponding apparatus 10, which in turn can be used for the vinification of corresponding crushed grape, and comprises corresponding processor means 12, input means 14 of corresponding data and/or signals into said processor means 12, and output means 16 of corresponding data and/or signals originating from said processor means 12.

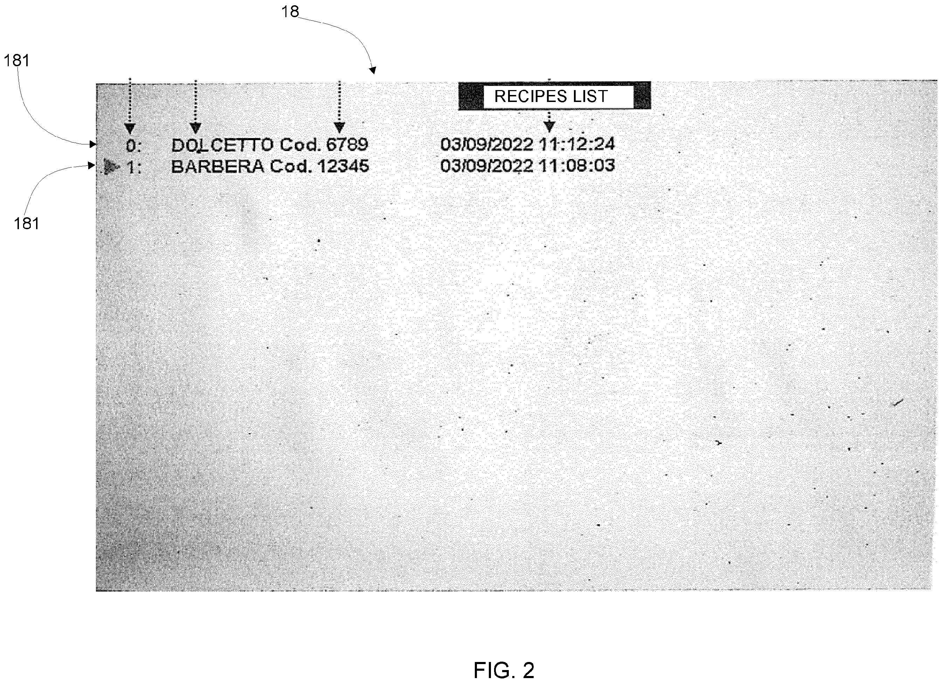

The apparatus 10 further comprises a collection or set 18 of vinification recipes 181, which collection 18 is housed in a corresponding memory of, or in connection with, said processor means 12e which is illustrated by way of example in figure 2.

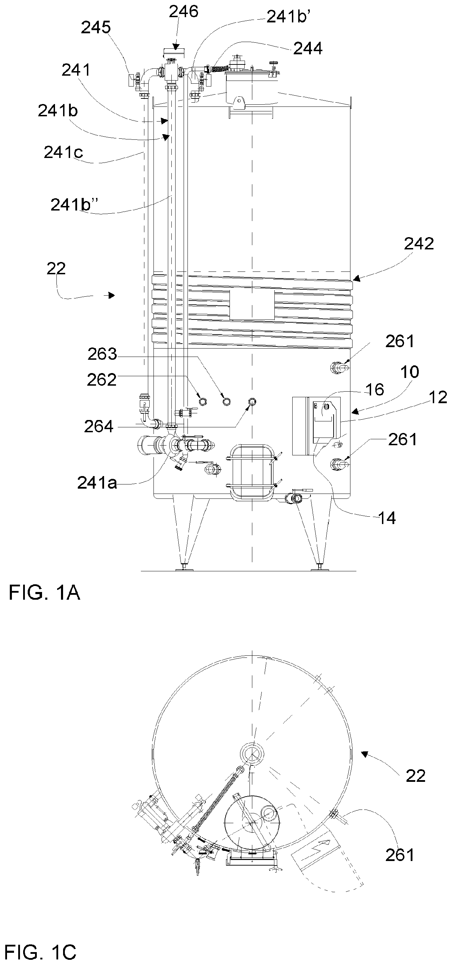

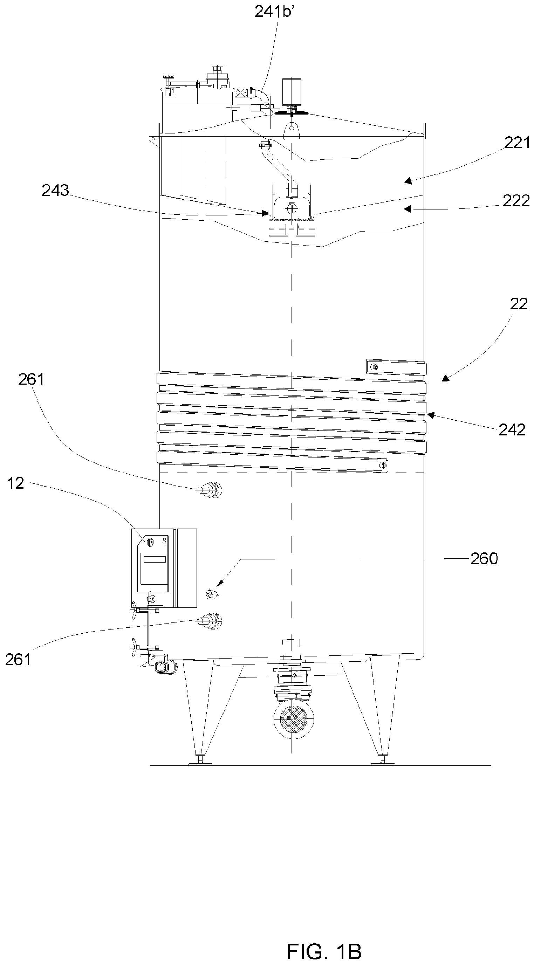

In the following, the term apparatus for, or usable for, the vinification of corresponding crushed grape is to be understood as any device or equipment that can be used for the purpose of designing and/or implementing a vinification process. In particular, said apparatus could be a simple processor device, for example a smartphone, a PC, a tablet, or a PLC or the like, which can be used to perform corresponding preliminary steps of the vinification process, for example to define a corresponding and desired vinification recipe, or said apparatus could be a sub-form of a complex apparatus 10, such as the one described herein and illustrated in figure 1, which includes a dedicated microprocessor card, and by means of which the entire vinification process, or maceration-fermentation process, of corresponding crushed grape can be performed, or implemented, and which is capable of performing corresponding activities or operations on said crushed grapes, or on the corresponding grape must, as will be better understood in any case from the following description.

As can be deduced from the figures, according to the process, corresponding vinification inputs 20 are provided to said processor means 12, and said processor means 12 are configured such that, starting from said vinification inputs 20, they advantageously select, in 19, in said collection, or set, 180 of vinification recipes, a corresponding vinification recipe 181.

In this way, it is possible to quickly arrive at an optimal vinification recipe that is selected according to the vinification inputs entered.

In addition, human errors in recipe selection with related negative consequences on quality or deviations of the obtained wine from the desired one can be avoided to a maximum degree, thus increasing the sustainability of the vinification process.

Advantageously, as can be deduced from said figures, according to a preferred embodiment of the process, said vinification inputs 20 comprise one or more, preferably a plurality of, predetermined vinification eventualities 201, 202, 203, 204, 204, the respective vinification eventuality 201, 202, 203, 204, 204 comprising one or more, preferably a plurality of, predetermined options 201b, 201c, 201d; 202a, 202b, 202c, 202d; 203a, 203b, 203c, 203d; 204a, 204b, 204c of said vinification eventuality 201, 202, 203, 204, 204.

This makes it particularly easy to provide data for the selection of the vinification recipe.

Advantageously, as can be deduced from said figures, said predetermined vinification eventualities 20 comprise one or more eventualities related to the characteristics of the grapes and/or the crushed grapes to be processed 201, 202 and one or more eventualities related to the characteristics of the wine to be obtained 203, 204.

As can be deduced from said figures, in an appreciably advantageous manner, according to another aspect of the procedure, said vinification inputs 20 are provided by selecting respective predetermined options 201a, 201b, 201c, 201d; 202a, 202b, 202c, 202d; 203a, 203b, 203c, 203d; 204a, 204b, 204c from the corresponding predetermined vinification eventualities 201, 202, 203, 204.

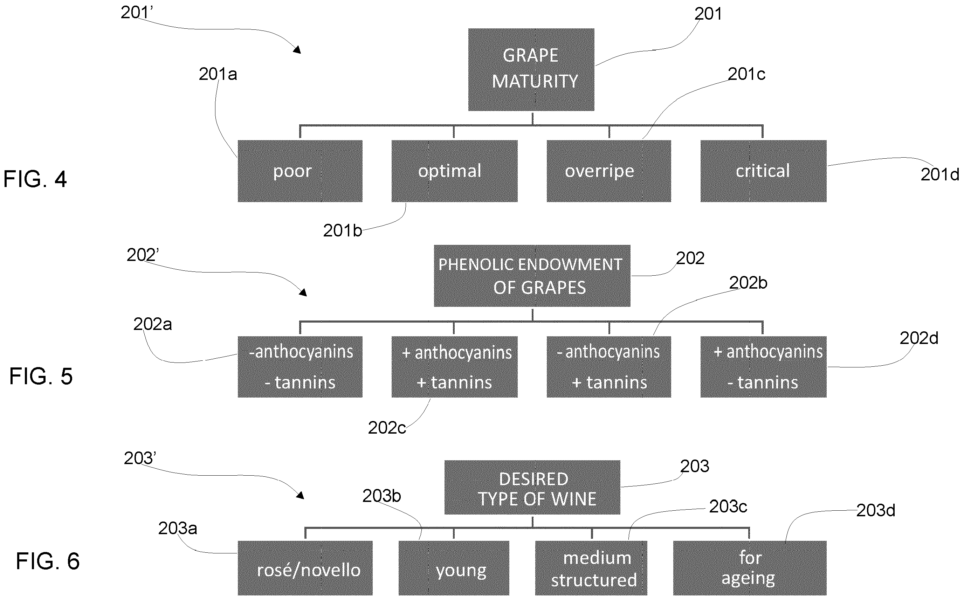

As can be deduced from said figures, in particular from figures 4 to 6, according to another aspect of the process, in a particularly advantageous manner, said vinification inputs 20 are provided by selecting respective predetermined options 201a, 201b, 201c, 201d; 202a, 202b, 202c, 202d; 203a, 203b, 203c, 203d; 204a, 204b, 204c of the corresponding predetermined vinification eventualities 201, 202, 203, 204, by means of a corresponding video interface 201', 202', 203', 204', in particular wherein said predetermined options 201a, 201b, 201c, 201d; 202a, 202b, 202c, 202d; 203a, 203b, 203c, 203d; 204a, 204b, 204c are displayed or listed for selection.

Advantageously, as can be deduced from said figures and in particular from figure 1, said apparatus 10 usable for the vinification of corresponding crushed grapes comprises a tank 22 for containing the crushed grapes, in particular having an upper vat or chamber 221, which is adapted to contain the grape must being pumped over, and a lower and main chamber, or vat, 222, containing the crushed grapes, which are connected to each other by means of a corresponding intermediate wall 223, in particular horizontally extended at which a valve 224 is provided which can be opened and closed to allow the passage of said grape must from said upper vat or chamber 221 to said lower and main chamber, or vat 222. In particular, the tank 22 is equipped with a means, or sensor, for detecting when the tank 22 itself has been filled, which is not particularly illustrated in the appended figures.

The apparatus further comprises a must delivery or pump-over pump 241a, drawing at the lower part of said lower and main chamber, or vat 222, and a corresponding pump-over conduit 241b, extending between said pump-over pump 222a and said upper vat or chamber 221 of said tank 22, for transferring grape must from said lower and main chamber, or vat 222 to said upper vat or chamber 221.

As illustrated, a second conduit 241c departs from the pump-over conduit 241b to feed the must directly into said lower and main chamber, or vat, 222, particularly after it has been suitably aerated, as will be seen in the following of the present description.

As illustrated, the pump-over conduit 241b has a corresponding branch 241b' departing from a must flow diversion zone 246, which the must reaches through the main pump-over conduit 241b and from which the conduit 241c feeding aerated must under the marc cap also departs.

As can be deduced from figure 1, said apparatus 10 for the vinification of corresponding crushed grapes comprises active means 24 on the crushed grapes or grape must, in particular comprising one or more of the following: means 241 of pumping over the grape must above the same crushed grapes, in particular defining, suitably managed, means for wetting the cap of said grape must, i.e. for wetting the upper part comprising the grape marc and seeds floating above the must of said crushed grapes and which especially allow the hydration and inflation of said cap, which is located below said intermediate wall 223 which divides said upper vat or chamber 221 from said main chamber or vat 222, and stirring means of the same crushed grapes.

In fact, once the grape marc cap has been hydrated and inflated, with a subsequent stirring step that causes the grape must to pass from the upper secondary chamber 221 to the main chamber 22 in a consistent and relevant manner, the same grape marc cap sinks and is stirred into the mass of must present in the lower main chamber 222, and then rises again to reform above the grape must in the same main and lower chamber 222. This results in homogenisation of the marc with the must, homogenisation of the yeast, homogenisation of the temperature and homogenisation of the extracted compounds.

Said pumping over and wetting are defined by the opening times of said valve 224 which can be opened and closed to allow the passage of said grape must from said upper vat or chamber 221 to said lower and main vat or chamber 222 and by the filling condition of said upper vat or chamber 221. In practice, a short opening of said valve 224 enables the simple wetting of the cap to be obtained, while a stirring of the crushed grapes is obtained by the consistent passage of grape must from said upper vat or chamber 221 to said lower and main chamber or vat 222.

As can be deduced from said figures 1A to 1C, said apparatus 10 for the vinification of corresponding crushed grape comprises as further active means 24 on the crushed grapes, one or more of the following: means 242 for thermal conditioning, in particular for cooling or heating said crushed grapes, preferably comprising a heat exchange coil which surrounds said tank 22 for containing the crushed grapes, and not particularly illustrated in the appended figures, the means 244 for aerating the grape must being fed to said upper tank or chamber 221, and the means 245 for aerating the grape must being fed into the lower and main chamber, or tank 222, in particular for the purpose of aerating the must under the grape marc cap.

Advantageously, as can be deduced in particular from said figures 1A to 1C, said apparatus 10 usable for the vinification of corresponding crushed grapes further comprises corresponding means 26 for detecting physical and/or chemical parameters of said crushed grapes, in particular for detecting the temperature, especially through a corresponding sensor 260, detecting the density of said crushed grapes, in particular by means of a corresponding sensor 261, i.e. a first and a second density sensor 261, 261, preferably placed at different height levels in order to obtain more reliable density measurements, and from the signals of these to obtain the alcohol developed by means of a linear interpolation algorithm of the density data detected by these, detection of the redox potential, in particular by means of a corresponding sensor 262, detection of the amount of dissolved oxygen in the crushed grapes, in particular by means of a corresponding sensor 263, and detection of the colouring extracted during maceration, in particular by means of a corresponding sensor 264.

Advantageously, as can be deduced from said figures, said input means 14 of corresponding data and/or signals into said processor means 12 comprise a respective keyboard, or equivalent, for input of corresponding commands, in particular defined by means of a touch screen of said processor means 12 and/or said means 26 of detecting physical and/or chemical parameters of said crushed grapes.

Preferably, in practice, the apparatus is, or may comprise, as illustrated, a winemaker having at least one respective tank 22 for containing crushed grapes, corresponding active means 24 on the crushed grapes and corresponding means 26 for detecting physical and/or chemical parameters of said crushed grapes.

As can be deduced from said figures, advantageously, said output means 16 of corresponding data and/or signals originating from said processor means 12 comprise a display screen of said processor means 12 and/or said means active 24 on the crushed grapes.

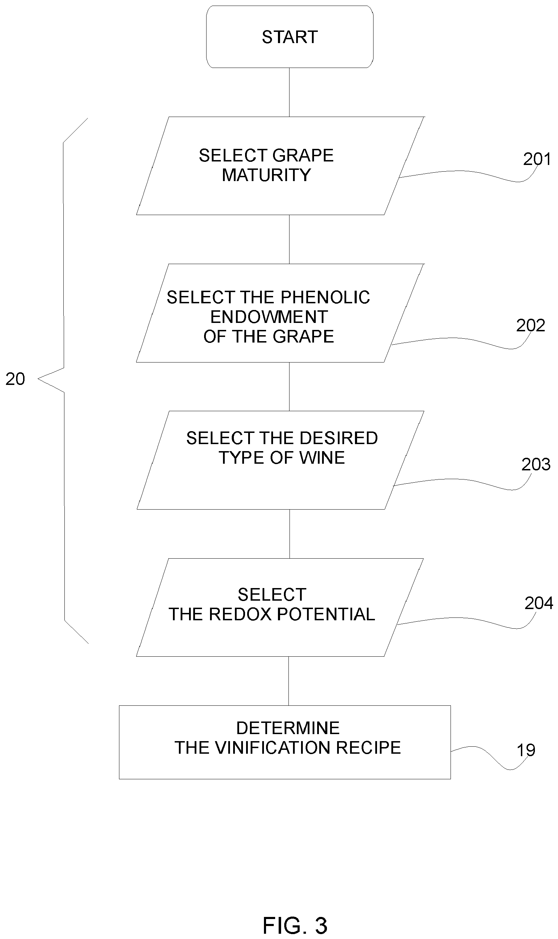

As can be deduced from said figures 3 to 7, with appreciable advantage, said predetermined vinification eventualities 20 comprise, or consist of, one or more of the following: the grape maturity 201 and the phenolic endowment of the grape 202, which are related to the characteristics of the grape, the type of wine desired 203 and the redox potential 204, which are related to the characteristics of the wine to be obtained 203, 204.

Advantageously, as can be deduced from the aforementioned figures, particularly figure 4, grape maturity 201 comprises, or consists of, the following predetermined options: poor 201a, optimal 201b, overripe 201c and critical 201d.

As can be deduced from said figures, in particular figure 5, advantageously, the phenolic endowment of the grape 202 is a function of the level of anthocyanins and tannins present in the grape, and in particular comprising, or consisting of, the following predetermined options: low anthocyanin level and low tannin level 202a, low anthocyanin level and high tannin level 202b, high anthocyanin level and high tannin level 202c, and high anthocyanin level and low tannin level 202d.

As can be deduced from said figures, in particular figure 6, advantageously, the desired type of wine 203 comprises, or consists of, the following predetermined options: rosé/novello 203a, young 203b, medium-structured 203c and aged 203d, particularly referring to a red wine.

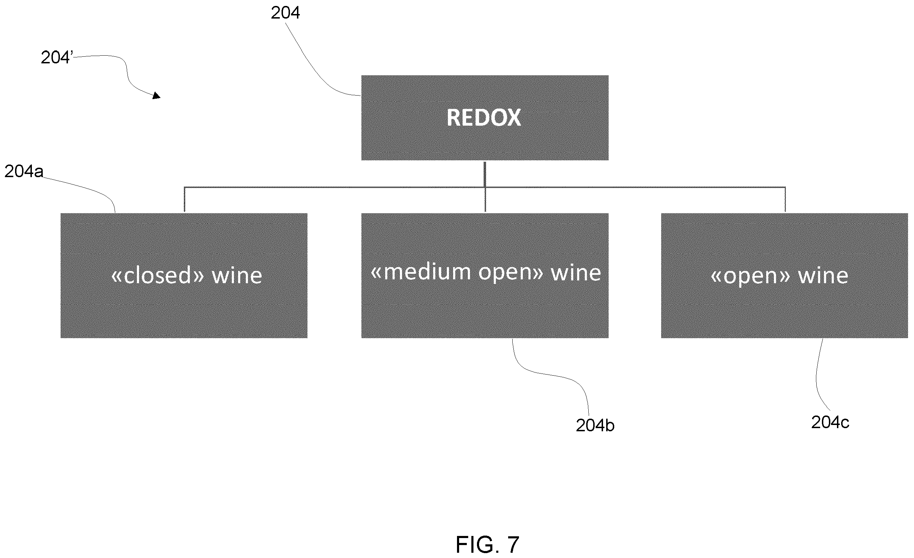

As can be deduced from said figures, in particular figure 7, the redox, or redox potential, 204 comprises, or consists of, the following predetermined options: closed wine, in particular with the potential which is between -200 mV and 100 mV, medium open wine, in particular with a potential between 100 mV and 400 mV, and open wine, in particular with a potential between 220 mV and 500 mV.

It must be understood, however, that the selection sequence illustrated in figure 3 is not binding and may differ from the one shown.

Advantageously, as can be deduced from said figures, according to another aspect of the procedure, a respective, single vinification recipe 181 is corresponding to, or selectable from, a corresponding single set, or single plurality, of predetermined options. In practice, for example, if it is chosen to obtain a medium open young wine and it is assessed that the ripeness of the grapes is poor, with the phenolic endowment of the grapes comprising more anthocyanins and less tannins, a single, predefined vinification recipe is obtained that allows the desired result, or wine to be obtained.

Advantageously, said processor means 12 are configured to allow the operator to initiate the processing of the recipe by the apparatus, for example by activating a corresponding start button highlighted on the display of said processor means 12 which is not particularly illustrated in said figures.

Advantageously, in an alternative manner, it may also be provided that a plurality of vinification recipes 181 corresponds to, or is selectable from, a corresponding single set, or single plurality, of predetermined options of said vinification eventualities 201, 202, 203, 204.

Advantageously, therefore, in an alternative manner, said processor means 12 are configured, or can be configured, to allow the operator, to perform, among the plurality of vinification recipes that are proposed, a selection of a respective recipe to be processed by said apparatus 10 usable for the vinification of corresponding crushed grapes, for example by means of a corresponding button or active zone that is shown on the display of said processor means 12, which is not particularly illustrated in said figures.

Advantageously, in another aspect, said processor means 12 are configured in such a way as to determine whether or not an acceptable result can be achieved with the selected options.

Advantageously, said processor means 12 are configured so that, after determining whether an acceptable result can be achieved with the selected options, they determine one or more corresponding vinification recipes.

Advantageously, said processor means 12 are configured so that after determining whether an acceptable result cannot be reached with the selected options, they emit a corresponding message, in particular on the display 16 of the processor means 12, in particular a message informing that a technical error has been committed. This could be the case if, for example, unripe grapes are selected whose phenolic endowment provides for the option of fewer anthocyanins and fewer tannins and it is chosen to make a wine for ageing.

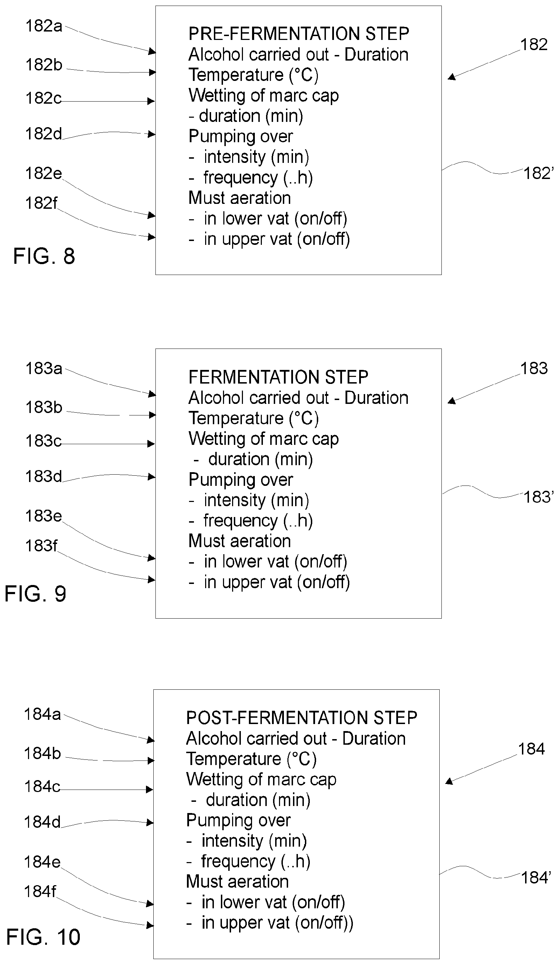

As can be deduced from said figures 8 to 12, in a particularly advantageous manner, according to another aspect of the procedure, the respective vinification recipe 181 defines one or more of the following vinification steps: a pre-fermentation step 182, a fermentation step 183, and a post-fermentation step 184, in particular which are displayed overall in a corresponding graphical interface 181'.

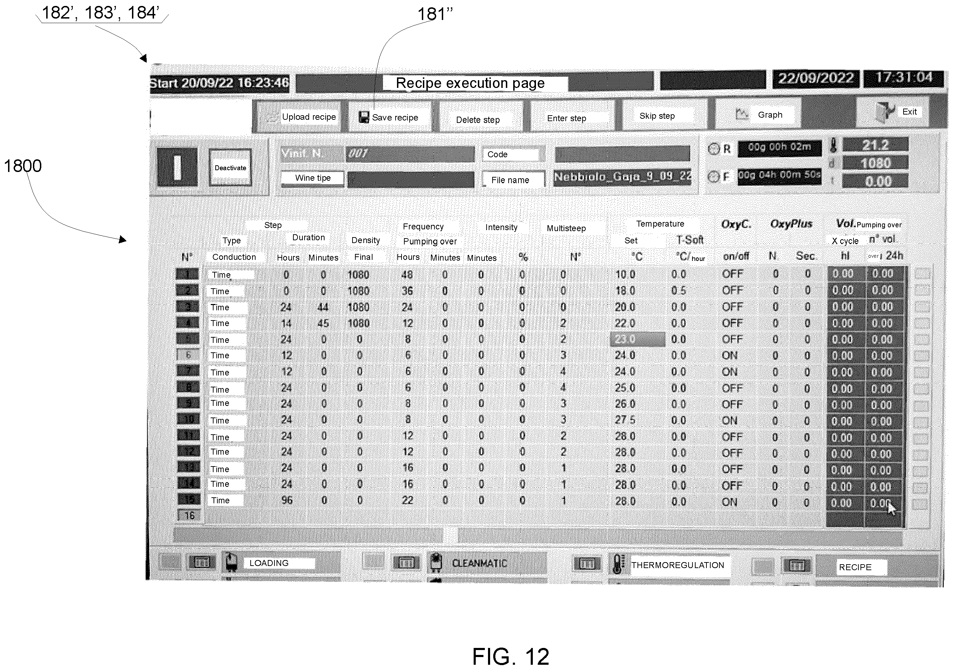

As can be deduced from said figures, in particular figure 8, advantageously, said pre-fermentation step 182 of the recipe defining one or more of the following occurrences: the temperature the crushed grapes 182a must have in the pre-fermentation step, the duration or alcohol carried out 182b of said pre-fermentation step, and the execution of one or more of the following activities on the crushed grapes or grape must in the pre-fermentation step: the wetting of the grape marc cap 182c, in particular the duration in minutes thereof, the pumping over of must in the upper vat 182d, in particular the intensity in minutes and the frequency in hours thereof, from which the subsequent stirring of the crushed grapes in the main lower vat, the aeration of the grape must in the lower vat, or chamber, 182e, the aeration of the grape must in the upper vat, or chamber, 182f are inferred, in particular which occurrences and activities are displayed in a corresponding graphical interface 182', e.g. graphically organised as illustrated in figure 12.

Advantageously, as can be deduced from said figures, in particular figure 9, advantageously, said fermentation step 183 of the recipe defining one or more of the following occurrences: the temperature the crushed grapes 183a must have in the fermentation step, the duration or alcohol carried out 183b of said fermentation step, and the execution of one or more of the following activities on the crushed grapes or grape must in the fermentation step: the wetting of the grape marc cap 183c, in particular the duration in minutes thereof, the pumping over of must in the upper vat 183d, in particular the intensity in minutes and the frequency in hours thereof, from which the subsequent stirring of the crushed grapes in the main lower vat, the aeration of the grape must in the lower vat, or chamber, 183e, the aeration of the grape must in the upper vat, or chamber, 183f are inferred, in particular which occurrences and activities are displayed in a corresponding graphical interface 183', e.g. graphically organised as illustrated in figure 12.

As can be deduced from said figures, in an appreciably advantageous manner, said post-fermentation step 184 defining one or more of the following occurrences: said post-fermentation step 184 of the recipe defining one or more of the following occurrences: the temperature the crushed grapes 184a must have in the post-fermentation step, the duration or alcohol carried out 184b of said post-fermentation step, and the execution of one or more of the following activities on the crushed grapes or grape must in the fermentation step: the wetting of the grape marc cap 184c, in particular the duration in minutes thereof, the pumping over of must in the upper vat 184d, in particular the intensity in minutes and the frequency in hours thereof, from which the subsequent stirring of the crushed grapes in the main lower vat, the aeration of the grape must in the lower vat, or chamber, 184e, the aeration of the grape must in the upper vat, or chamber, 184f are inferred, in particular which occurrences and activities are displayed in a corresponding graphical interface 184', e.g. graphically organised as illustrated in figure 12.

However, the procedure and said vinification recipes provided through the same procedure can be better understood with reference to the following implementation examples.

### IMPLEMENTATION EXAMPLE 1

The following data are entered:
grape maturity: ripe;
phenolic grape endowment: + anthocyanins, and - tannins.

The following target or desired type of wine is entered:
young wine.

The desired redox potential for managing the vinification process is entered.

The following vinification 1 recipe is selected:

| **Step** | **Density (alcohol )** | **Step duration** | **T (° C)** | **T gracient step change** | **Pumping over frequency** | **Cap wetti ng** | **Inte resit y** | **Aeration of must sent to upper vat** | **Aeration of must returned to lower vat** |
|---|---|---|---|---|---|---|---|---|---|
| preferment ation | 0-2% vol | from 8 to 24h | 15 | | 6h | 2.00 | 0.00 | off | off |
| ferment ation | 3-8% vol | linked to alcohol development kinetics | 25 | 2°C/h | 4h | 2.00 | 3.00 | off | off |
| ferment ation | 9-13% | linked to alcohol development kinetics | 28 | 1°C/h | 3h | 2.00 | 5.00 | on | on |
| post-ferment ation | NO | | | | | | | | |

### IMPLEMENTATION EXAMPLE 2

The following data are entered:
grape maturity: ripe,
phenolic grape endowment: + anthocyanins, and + tannins.

The following target or desired type of wine is entered:
red wine for ageing.

The desired redox potential for managing the vinification process is entered.

The following vinification 2 recipe is selected:

| **Step** | **Density (alcoho l)** | **Step duration** | **T(°C)** | **Tgradient step change** | **Pumping over frequency** | **Cap wetti ng** | **Inte nsit y** | **Aeration of must sent to uppervat** | **Aeration of must returned to lower vat** |
|---|---|---|---|---|---|---|---|---|---|
| preferment ation | 0-2% vol | from 8 to 24h | 20 with enzym es | | 6h | 3.00 | 0.00 | off | off |
| ferment ation | 3-6% vol | linked to alcohol development kinetics | 27 | 2°C/h | 4h | 2.00 | 3.00 | off | off |
| ferment ation | 7-12% | linked to alcohol development kinetics | 30 | 1°C/h | 3h | 2.00 | 5.00 | on | on |
| post-ferment ation | 13-14% | 3 to 7 days | 30 | | 12h | 2.00 | 2.00 | on | off |

As can be deduced from said figures, in a particularly advantageous manner, said vinification inputs 20, or said predetermined vinification events 201, 202, 203, 204, are in the form of data or signals received by said processor means 12 through said input means 14.

Advantageously, as can be deduced from said figures, said vinification recipes 181 can be displayed through said output means 16, in particular from the display of said processor means 12 on board said apparatus 10 for the vinification of corresponding crushed grape, and yet could also be displayed on the display of any possibly remote processor means.

As can be deduced from said figures, with appreciable advantage, according to another aspect of the process, said processor means 12 control the vinification apparatus 10, i.e. said means active 24 on the crushed grape, to automatically execute the respective vinification recipe 181.

In this way, operator intervention in the vinification process can be partly or completely avoided and human errors and the costs resulting from them can be minimised, thus increasing the sustainability of the vinification process.

As can be deduced from said figures, in an appreciably advantageous manner, according to another aspect of the procedure, it is envisaged that the vinification recipe 181 can be modified manually in the course of execution, in particular by inputting corresponding data or signals into said processor means 12 of the apparatus, for example by means of the graphical interface illustrated in figure 12.

In this way, the operator can make his/her own specific contribution to the vinification process.

Advantageously, as can be deduced from said figures, according to another aspect of the procedure, a new vinification recipe 181 can be envisaged to be introduced into the set of vinification recipes 18, in particular through said input means 14 of corresponding data and/or signals in said processor means 12, for example through the graphical interface illustrated in figure 12.

Advantageously, as can be deduced from said figures, said processor means are, or comprise corresponding processor means 12' which are remotely connected, for example by means of a communication network, in particular the global communication network, with said processor means 12 of said apparatus 10 for the vinification of corresponding crushed grapes, and/or with said means active 24 on the crushed grapes and/or said means 26 for detecting physical and/or chemical parameters of said crushed grapes.

In this way, it is easy to operate remotely without necessarily having to be at the winemaker.

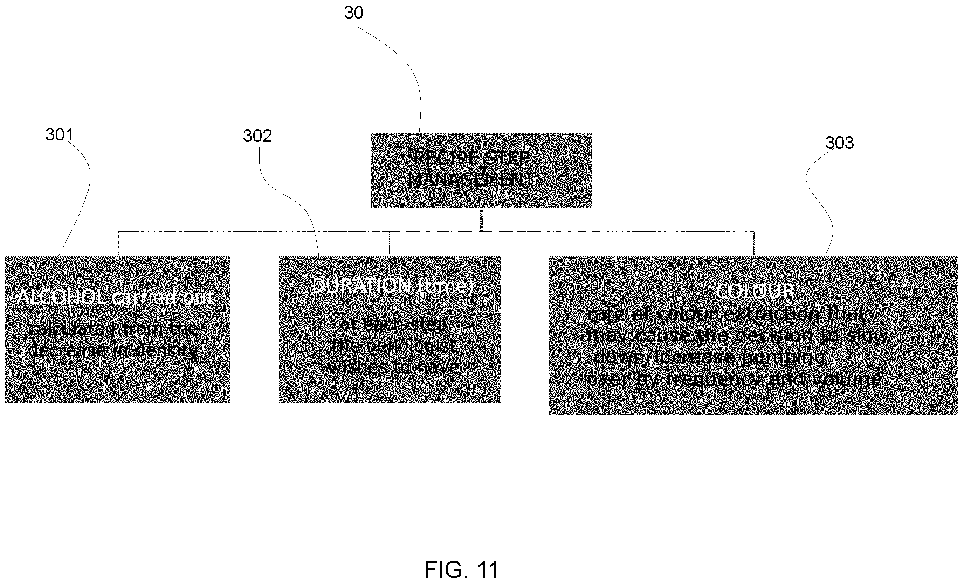

Advantageously, as can be deduced in particular from said figure 11, said processor means 12 are configured to manage the transition between the steps of the vinification recipe, in particular being implemented by said apparatus 10 for the vinification of corresponding crushed grapes, according to one or more corresponding control parameters 301, 302, 303.

Advantageously, as can be deduced in particular from said figure 11, said processor means 12 are configured in 30 to allow the selection of one or more corresponding control parameters 301, 302, 303 of the transition between the different steps of the vinification recipe, in particular by providing a corresponding graphical selection interface.

Advantageously, as can be deduced from the aforementioned figures, said control parameters that enable control of the transition between the various steps of the vinification recipe being performed are one or more of the following: the level of alcohol carried out 301, the duration 302, e.g. 48 hours for the pre-fermentation step, 5 days the fermentation step and 7 days the post-fermentation step, and/or the colour extracted 303.

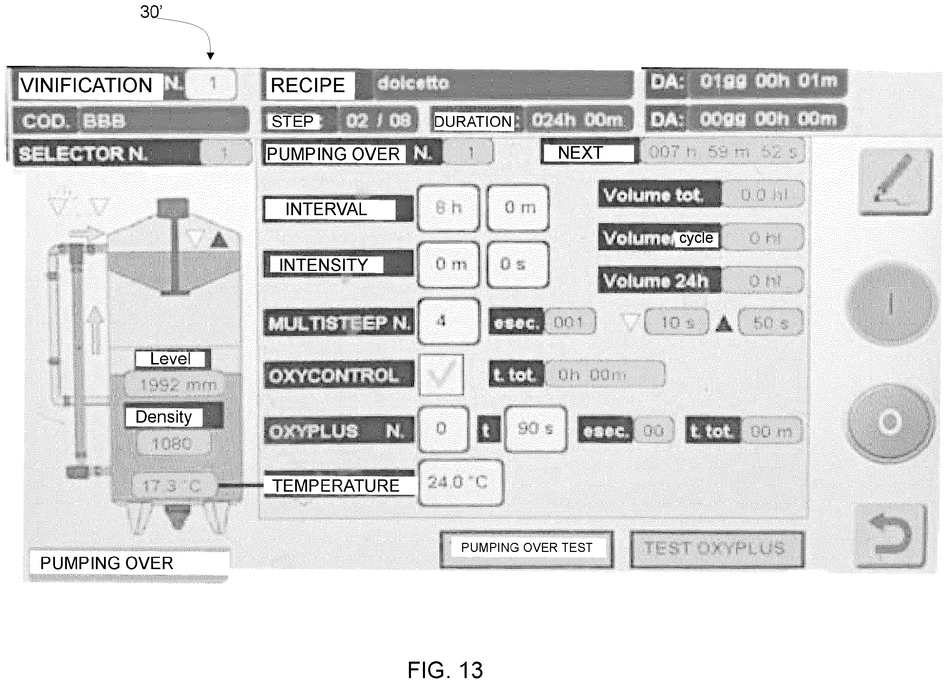

Advantageously, as illustrated, said processor means 12 are configured to control the vinification process or procedure, in particular implemented by said vinification apparatus 10 of corresponding crushed grapes, in particular whose steps and activities can advantageously be deduced from a corresponding graphical interface 30' illustrated in figure 13.

In this way, the vinification process can be optimally managed, avoiding or reducing the intervention of the operator or oenologist to a maximum degree, and thus minimising any errors to the benefit of the sustainability of the vinification process.

Advantageously, said processor means 12 are configured to display, in particular on a corresponding display 16, or on a remotely connected display, especially of said processor means 12, the alcohol trend in the vinification process, preferably which is generated from signals received by said density detection means 261 of said crushed grapes.

Advantageously, as can be deduced from said figures, said processor means 12 are configured to activate, in particular automatically, one or more of said means active 24 on the crushed grapes or grape must in response to a signal received from said means 26 for detecting physical and/or chemical parameters of said crushed grapes.

Advantageously, according to a preferred procedure, following a signal received from said sensor 262 of the redox potential, said processor means 12 are configured to activate an aeration or oxygenation activity of the must, if the detected potential is lower than the predetermined minimum potential, for example if it is lower than -200mV, when the interval for obtaining a closed wine has been set between -200 mV and 100 mV, or if it is less than 100 mV, when the interval for obtaining a medium open wine has been set between 100 mV and 400 mV, or if it is less than 220 mV, when the interval for obtaining an open wine has been set between 220 mV and 500 mV.

Advantageously, according to a preferred procedure, following a signal received from said density sensor 261, and preferably the determination of the corresponding alcohol level, if the alcohol level is lower than the desired alcohol level said processor means 12 are configured to increase the temperature of said crushed grapes, activating the corresponding conditioning means 242, if, on the other hand, said alcohol level is higher than the desired alcohol level, said processor means 12 are configured to decrease the temperature of said crushed grapes, activating the corresponding conditioning means 242.

Advantageously, according to another preferred procedure, following a signal received from said extracted colour sensor 264, if it appears that the colour is being extracted slowly, said processor means 12 are configured to increase the number of pumpings over of said grape must performed by said pumping over means 241, or if it appears that the colour is extracted excessively fast, said processor means 12 are configured to decrease the number of pumpings over of said grape must performed by said pumping over means 241.

Advantageously, according to a further preferred procedure, following a signal received from said redox potential sensor 262, if said detected potential is higher than a predetermined maximum potential, said processor means 12 are configured to block the aeration of said grape must, or, preferably, following a further signal received from said dissolved oxygen sensor 263, if this dissolved oxygen value is not greater than a predetermined value, preferably if it is not greater than 1ppm, said processor means 12 are configured not to block the aeration of said grape must, otherwise if this dissolved oxygen value is greater than a predetermined value, preferably if it is greater than 1ppm, said processor means 12 are configured to block the aeration of said grape must.

Advantageously, as can be deduced from the graphical user interface 1800 in figure 12, said processor means 12 are configured to store the vinification procedure implemented and to allow it to be recalled by the operator. In particular, an advantageous recipe save button 181" can be arranged in said interface 1800.

In this way, the procedure actually implemented can be the model for subsequent vinification procedures.

This process is then implemented, i.e. this apparatus is controlled, by a corresponding programme, software, or artificial intelligence, used by the processor means 12.

Advantageously, as can be deduced from the aforementioned figures, such processor means 12 are configured to suggest performing an additional operation, especially to the given recipe, to achieve a desired result or wine, and the characteristics of the grapes and/or must are not optimal for that purpose, e.g. it may be suggested to add enzymes or tannins, respectively, to aid pigment extraction in the case of unripe grapes or to protect red pigments if the grapes have few anthocyanins.

Advantageously, said processor means 12 are configured to suggest an additional operation by issuing a corresponding message on corresponding display means, in particular on the display 16 of the processor means 12.

In practice, an apparatus 10 has been provided which can be used for the vinification of crushed grapes, advantageously, said processor means 12 are configured in such a way that, from corresponding predefined vinification inputs 20, they select 19 in said collection 180 of vinification recipes 181 a corresponding vinification recipe 181.

In practice, as is evident, the technical characteristics illustrated above allow, individually or in a respective combination, achieving one or more of the following advantageous results:
- it is possible to quickly arrive at an optimal vinification recipe that is selected according to the vinification inputs entered;
- human errors of recipe choice with their respective consequences can be avoided to a maximum degree;
- operator intervention in the vinification process can be avoided altogether, or in part;
- the operator can make a specific contribution to the vinification process;
- the vinification process can bed optimally managed, avoiding or reducing to a maximum degree the intervention of the operator or oenologist;
- it is possible to easily operate remotely without necessarily having to be at the winemaker;
- the procedure actually implemented can be the model for subsequent vinification procedures.

The present invention is susceptible to evident industrial application. The person skilled in the art will also be able to imagine numerous modifications and/or variations to be made to the same invention, while remaining within the scope of the inventive concept, as extensively explained. Furthermore, the person skilled in the art will be able to imagine further preferred embodiments of the invention comprising one or more of the above illustrated features of the above-referenced preferred embodiment, in particular as set forth in the appended claims. Moreover, it must also be understood that all the details of the invention can be replaced by technically equivalent elements.

## Claims

1. Process usable for the vinification of crushed grapes, in particular comprising liquid must and solid marc, using a corresponding apparatus for the vinification of corresponding crushed grapes and comprising processor means **(12),** input means **(14)** of corresponding data and/or signals into said processor means **(12),** and output means **(16)** of corresponding data and/or signals originating from said processor means **(12),** and using a collection or set **(18)** of vinification recipes **(181),** which collection is housed in a corresponding memory of, or in connection with, said processor means **(12); characterised in that** corresponding vinification inputs **(20)** are provided to said processor means **(12),** and said processor means **(12)** are configured such that, starting from said vinification inputs **(20),** they select **(19),** in said collection, or set, **(180)** of vinification recipes, a corresponding vinification recipe **(181).**

2. Process according to claim **1, characterised in that** said vinification inputs **(20)** comprise one or more, preferably a plurality of, predetermined vinification eventualities **(201, 202, 203, 204, 204),** the respective vinification eventuality **(201, 202, 203, 204, 204)** comprising one or more, preferably a plurality of, predetermined options **(201a, 201b, 201c, 201d; 202a, 202b, 202c, 202d; 203a, 203b, 203c, 203d; 204a, 204b, 204c)** of said vinification eventuality **(201, 202, 203, 204, 204).**

3. Process according to claim **2, characterised in that** said predetermined vinification eventualities **(20)** comprise one or more eventualities related to the characteristics of the grapes and/or the crushed grapes to be processed **(201, 202)** and one or more eventualities related to the characteristics of the wine to be obtained **(203, 204).**

4. Process according to any one of the preceding claims **2 and 3, characterised in that** said vinification inputs **(20)** are provided by selecting respective predetermined options **(201a, 201b, 201c, 201d; 202a, 202b, 202c, 202d; 203a, 203b, 203c, 203d; 204a, 204b, 204c)** from the corresponding predetermined vinification eventualities (201, 202, 203, 204).

5. Process according to claim **4, characterised in that** that said vinification inputs **(20)** are provided by selecting respective predetermined options **(201a, 201b, 201c, 201d; 202a, 202b, 202c, 202d; 203a, 203b, 203c, 203d; 204a, 204b, 204c)** of the corresponding predetermined vinification eventualities **(201, 202, 203, 204),** by means of a corresponding video interface **(201', 202', 203'),** in particular wherein said predetermined options **(201a, 201b, 201c, 201d; 202a, 202b, 202c, 202d; 203a, 203b, 203c, 203d; 204a, 204b, 204c)** are displayed or listed for selection.

6. Process according to any one of the preceding claims, **characterised in that** the apparatus **(10)** usable for the vinification of corresponding crushed grapes comprising a tank **(22)** for containing said crushed grapes, in particular having an upper vat or chamber **(221)** and a lower and main chamber, or vat **(222),** connected to each other through a corresponding intermediate wall **(223),** in particular horizontally extended. at which a valve **(224)** is provided which can be opened and closed to allow the passage of said grape must from said upper vat or chamber **(221)** to said lower and main chamber, or vat **(222).**

7. Process according to any one of the preceding claims, **characterised in that** the apparatus **(10)** usable for vinification of corresponding crushed grapes comprises active means **(24)** on the crushed grapes or grape must, in particular comprising one or more of the following: means of pumping over the grape must above the same crushed grapes, in particular defining, suitably managed, means for wetting the cap of said grape must, and means for stirring said grape must, and means **(242)** for thermal conditioning, in particular, cooling or heating said crushed grapes, means **(244)** for aerating the grape must being fed to said upper vat or chamber **(221),** and means **(245)** for aerating the grape must being fed to said lower and main chamber, or vat **(222).**

8. Process according to any one of the preceding claims, **characterised in that** said apparatus **(10)** usable for the vinification of corresponding crushed grapes comprises means **(26)** for detecting physical and/or chemical parameters of said crushed grapes, in particular for detecting the temperature, especially through a corresponding sensor **(260),** detecting the density of said crushed grapes, in particular by means of a corresponding sensor **(261),** i.e., a first and a second sensor **(261, 261),** for detecting the redox potential, in particular by means of a corresponding sensor **(262),** for detecting the amount of dissolved oxygen in the crushed grapes, in particular by means of a corresponding sensor **(263),** and for detecting the colouring extracted during maceration, in particular through a corresponding sensor **(264).**

9. Process according to any one of the preceding claims, **characterised in that** that said input means **(14)** of corresponding data and/or signals into said processor means **(12)** comprise a respective keyboard, or equivalent, for input of corresponding commands and/or said means **(26)** of detecting physical and/or chemical parameters of said crushed grapes.

10. Process according to any one of the preceding claims, **characterised in that** said output means **(16)** of corresponding data and/or signals originating from said processor means **(12)** comprise a display screen of said processor means **(12)** and/or said means active **(24)** on the crushed grapes.

11. Process according to any one of the preceding claims **2 to 10, characterised in that** said predetermined vinification eventualities **(20)** comprise, or consist of, one or more of the following: the grape maturity **(201)** and the phenolic endowment of the grape **(202),** which are related to the characteristics of the grape, the type of wine desired **(203)** and the redox potential **(204),** which are related to the characteristics of the wine to be obtained **(203, 204).**

12. Process according to claim **11, characterised in that** grape maturity **(201)** comprises the following predetermined options: poor **(201a),** optimal **(201b),** overripe **(201c)** and critical **(201d).**

13. Process according to any one of the preceding claims **11 and 12, characterised in that** the phenolic endowment of the grape **(202)** is a function of the level of anthocyanins and tannins present in the grape, and in particular comprising, or consisting of, the following predetermined options: low anthocyanin level and low tannin level **(202a),** low anthocyanin level and high tannin level **(202b),** high anthocyanin level and high tannin level **(202c),** and high anthocyanin level and low tannin level (202d).

14. Process according to any one of the preceding claims **11 to 13, characterised in that** the desired type of wine **(203)** comprises, or consists of, the following predetermined options: rosé/novello **(203a),** young **(203b),** medium-structured **(203c)** and aged **(203d).**

15. Process according to any one of the preceding claims **11 to 14, characterised in that** the redox, or redox potential, **(204)** comprises, or consists of, the following predetermined options: closed wine, in particular with the potential which is between -200 mV and 100mv mV, medium open wine, in particular with a potential between 100 mV and 400 mV, and open wine, in particular with a potential between 220 mV and 500 mV.

16. Process according to any one of the preceding claims **2 to 15, characterised in that** a respective, single vinification recipe **(181)** is corresponding to, or selectable from, a corresponding single set, or single plurality, of predetermined options **(201a, 201b, 201c, 201d; 202a, 202b, 202c, 202d; 203a, 203b, 203c, 203d; 204a, 204b, 204c)** of said vinification eventualities **(201, 202, 203, 204).**

17. Process according to any one of the preceding claims **2 to 16, characterised in that** said processor means **(12)** are configured to allow the operator to initiate the processing of the recipe by the apparatus.

18. Process according to any one of the preceding claims **2 to 17, characterised in that** a plurality of vinification recipes **(181)** is corresponding to, or selectable from, a corresponding single set, or single plurality, of predetermined options **(201a, 201b, 201c, 201d; 202a, 202b, 202c, 202d; 203a, 203b, 203c, 203d; 204a, 204b, 204c)** of said vinification eventualities **(201, 202, 203, 204).**

19. Process according to any one of the preceding claims **2 to 18, characterised in that** said processor means **(12)** are configured to allow the operator, from among the plurality of vinification recipes which are proposed, to perform a selection of a respective recipe to be processed by said apparatus **(10)** usable for the vinification of corresponding crushed grapes.

20. Process according to any one of the preceding claims **2 to 19, characterised in that** said processor means **(12)** are configured so as to determine whether or not an acceptable result can be reached with the selected options.

21. Process according to claim **20, characterised in that** said processor means **(12)** are configured so that, after determining whether an acceptable result can be achieved with the selected options, they determine one or more corresponding vinification recipes.

22. Process according to any one of the preceding claims **20 and 21, characterised in that** said processor means **(12)** are configured so that after determining whether an acceptable result cannot be reached with the selected options, they emit a corresponding message, in particular a message informing that a technical error has been committed.

23. Process according to any one of the preceding claims, **characterised in that** the respective vinification recipe **(181)** defines one or more of the following vinification steps: a pre-fermentation step **(182),** a fermentation step **(183),** and a post-fermentation step **(184).**

24. Process according to claim **23, characterised in that** said pre-fermentation step **(182)** of the recipe defining one or more of the following occurrences: the temperature said crushed grapes (**182a**) must have in the pre-fermentation step, the duration or alcohol carried out **(182b)** of said pre-fermentation step, and the execution of one or more of the following activities on said crushed grapes or grape must in the pre-fermentation step: the wetting of the grape marc cap **(182c),** in particular the duration in minutes thereof, the pumping over of must in the upper vat **(182d),** in particular the intensity in minutes and the frequency in hours thereof, from which the subsequent stirring of the crushed grapes in the main lower vat, the aeration of the grape must in the lower vat, or chamber, **(182e),** the aeration of the grape must in the upper vat, or chamber, **(182f)** are inferred.

25. Process according to any one of the preceding claims **23 and 24, characterised in that** said fermentation step **(183)** of the recipe defining one or more of the following occurrences: the temperature said crushed grapes **(183a)** must have in said fermentation step, the duration or alcohol carried out **(183b)** of said fermentation step, and the performance of one or more of the following activities on said crushed grapes or grape must in the fermentation step: the wetting of the grape marc cap **(183c),** in particular the duration in minutes thereof, the pumping over of must in the upper vat **(183d),** in particular the intensity in minutes and frequency in hours thereof, from which the subsequent stirring of the crushed grapes in the main lower vat is inferred, the aeration of the grape must in the lower vat, or chamber, **(183e),** the aeration of the grape must in the upper vat, or chamber, **(183f)** are inferred.

26. Process according to any one of the preceding claims **23 to 25, characterised in that** said post-fermentation step **(184)** of the recipe defining one or more of the following occurrences: the temperature said crushed grapes **(184a)** must have in the post-fermentation step, the duration or alcohol carried out **(184b)** of said post-fermentation step, and the performance of one or more of the following activities on the crushed grapes or grape must in the fermentation step: the wetting of the grape marc cap **(184c),** in particular the duration in minutes thereof, the pumping over of must in the upper vat **(184d),** in particular the intensity in minutes and the frequency in hours thereof, from which the consequent stirring of the crushed grapes in the main lower vat, the aeration of the grape must in the lower vat, or chamber, **(184e),** the aeration of the grape must in the upper vat, or chamber, **(184f)** are inferred.

27. Process according to any one of the preceding claims, **characterised in that** said vinification inputs **(20),** or said predetermined vinification eventualities **(201, 202, 203, 204),** are in the form of data or signals received by said processor means **(12)** through said input means **(14).**

28. Process according to any of the preceding claims, **characterised in that** said vinification recipes **(181)** are displayable through said output means **(16).**

29. Process according to any one of the preceding claims, **characterised in that** said processor means **(12)** control the vinification apparatus **(10),** i.e., said means active **(24)** on the crushed grapes, to automatically execute the respective vinification recipe **(181).**

30. Process according to any one of the preceding claims, **characterised in that** it is envisaged to be able to manually modify the vinification recipe **(181)** during execution, in particular by entering corresponding data or signals into said processor means **(12)** of the apparatus.

31. Process according to any one of the preceding claims, **characterised in that** a new vinification recipe **(181)** can be envisaged to be introduced into the set of vinification recipes **(18),** in particular through said input means **(14)** of corresponding data and/or signals in said processor means **(12).**

32. Process according to any one of the preceding claims or according to the pre-characterising part of claim **1, characterised in that** said processor means are, or comprise corresponding processor means **(12')** which are remotely connected with said processor means **(12)** of said apparatus **(10)** usable for the vinification of corresponding crushed grapes, and/or with said means active means **(24)** on the crushed grapes and/or said means **(26)** for detecting physical and/or chemical parameters of said crushed grapes.

33. Process according to any one of the preceding claims or according to the pre-characterising part of claim **1, characterised in that** said processor means **(12)** are configured to manage the transition between the steps of the vinification recipe, in particular being implemented by said apparatus **(10)** for the vinification of corresponding crushed grapes, according to one or more corresponding control parameters **(301, 302, 303).**

34. Process according to claim **33, characterised in that** said processor means **(12)** are configured **(in 30)** to allow the selection of one or more corresponding control parameters **(301, 302, 303)** of the transition between the different steps of the vinification recipe.

35. Process according to any one of the preceding claims **33 and 34, characterised in that** said control parameters which allow to control the passage between the various steps of the vinification recipe being carried out are one or more of the following: level of alcohol carried out **(301),** duration **(302)** and/or colour extracted **(303).**

36. Process according to any one of the preceding claims or according to the pre-characterising part of claim **1, characterised in that** said processor means **(12)** are configured to control the vinification process or procedure, in particular actuated by said apparatus **(10)** of vinification of corresponding crushed grapes.

37. Process according to any one of the preceding claims or according to the pre-characterising part of claim **1, characterised in that** said processor means **(12)** are configured to display, in particular on a corresponding display **(16),** especially of said processor means **(12),** the alcohol trend in the vinification process, preferably which is generated from signals received from said means (261) for detecting the density of said crushed grapes.

38. Process according to any one of the preceding claims or according to the pre-characterising part of claim **1, characterised in that** said processor means **(12)** are configured to activate one or more of said means active **(24)** on the crushed grapes or grape must in response to signal received from said means **(26)** for detecting physical and/or chemical parameters of said crushed grapes.

39. Process according to claim **38, characterised in that,** following a signal received from said sensor **(262)** of the redox potential, said processor means (12) are configured to activate an aeration or oxygenation activity of the must, if the detected potential is lower than the predetermined minimum potential.

40. Process according to any one of the preceding claims **38 and 39, characterised in that,** following a signal received from said density sensor **(261),** and preferably the determination of the corresponding alcohol level, if the alcohol level is lower than the desired alcohol level said processor means **(12)** are configured to increase the temperature of said crushed grapes, activating the corresponding conditioning means **(242),** if, on the other hand, said alcohol level is higher than the desired alcohol level, said processor means **(12)** are configured to decrease the temperature of said crushed grapes, activating the corresponding conditioning means **(242).**

41. Process according to any one of the preceding claims **38 to 40, characterised in that,** following a signal received from said extracted colour sensor **(264),** if it appears that the colour is being extracted slowly, said processor means **(12)** are configured to increase the number of pumpings over of said grape must performed by said pumping over means **(241),** or if it appears that the colour is extracted excessively fast, said processor means **(12)** are configured to decrease the number of pumpings over of said grape must performed by said pumping over means **(241).**

42. Process according to any one of the preceding claims **38 to 41, characterised in that,** following a signal received from said redox potential sensor **(262),** if said detected potential is higher than a predetermined maximum potential, said processor means **(12)** are configured to block the aeration of said grape must, or, preferably, following a further signal received from said dissolved oxygen sensor **(263),** if this dissolved oxygen value is not greater than a predetermined value, preferably if it is not greater than 1ppm, said processor means **(12)** are configured not to block the aeration of said grape must, otherwise if this dissolved oxygen value is greater than a predetermined value, preferably if it is greater than 1ppm, said processor means **(12)** are configured to block the aeration of said grape must.

43. Process according to any one of the preceding claims, **characterised in that** said processor means **(12)** are configured to memorise the vinification procedure actuated and to allow the recall thereof by the operator.

44. Process according to any one of the preceding claims, **characterised in that** said processor means **(12)** are configured to suggest performing an additional operation, especi4ally to the given recipe.

45. Process according to claim **44, characterised in that** said processor means **(12)** are configured to suggest an additional operation by issuing a corresponding message on corresponding display means, in particular on the display **(16)** of the processor means **(12).**

46. Apparatus **(10)** usable for the vinification of crushed grapes, in particular comprising liquid must and solid marc, comprising processor means **(12),** input means **(14)** of corresponding data and/or signals into said processor means **(12),** and output means **(16)** of corresponding data and/or signals originating from said processor means **(12);** a collection or set **(18)** of vinification recipes **(181),** said collection being housed in a corresponding memory of, or in connection with, said processor means **(12); characterised in that,** said processor means **(12)** are configured such that, from corresponding predefined vinification inputs **(20),** they select **(19)** in said collection **(180)** of vinification recipes **(181)** a corresponding vinification recipe **(181).**

47. Apparatus according to claim **46, characterised in that** it is made as illustrated in any one of the preceding claims 1 to 45.

48. Program, software, or artificial intelligence, usable by corresponding processor means (12), to implement a process according to any one of the preceding claims 1 to 45.

49. Process, apparatus, and program, each respectively **characterised in that** they are implemented according to any one of the preceding claims and/or as described and illustrated with reference to the attached drawings.
